# EUROPEAN PATENT APPLICATION

(11) **EP 3 468 091 A1**
(43) Date of publication of application: **10.04.2019**
(21) Application number: 18198516.9
(22) Date of filing: 03.10.2018
(51) Int. Cl.: H04L 5/00

(54) **SYSTEM AND METHOD FOR ADAPTIVE AGGREGATION OF BROADBAND COMMUNICATIONS CHANNELS FOR IN-FLIGHT AIRCRAFT**

(30) Priority: 03.10.2017 US 201715724033
(71) Applicant: Satcom1 France SARL, 93350 Le Bourget (FR)
(72) Inventor: GOUDAL, Francois, Morris Plains, NJ New Jersey 07950 (US); KAUFFMANN, Albin, Morris Plains, NJ New Jersey 07950 (US); NADER, Adrien, Morris Plains, NJ New Jersey 07950 (US)
(74) Representative: Houghton, Mark Phillip

(57) **Abstract**

A method for aggregating usage of broadband communications channels for an in-flight aircraft has been developed. First, wireless communication channel links are established between a network router and passengers on board the in-flight aircraft. Multiple communications channels are bonded together in a group by the router. Threshold parameters for the bonded group are set up based on the bandwidth requirements for priority passengers. These bandwidth requirements for priority passengers are continuously monitored. Communications channels are removed and added from the bonded group as needed to meet the bandwidth requirements for the priority passengers.

## Description

The present invention generally relates to broadband data transmission for in-flight aircraft, and more particularly to adaptive aggregation of voice and high-speed data communications channels for in-flight aircraft based on throughput demand.

### BACKGROUND

The demand for high speed broadband data transmission is ever-increasing. Although high-speed broadband communication access is available on many aircraft flights, it typically does not have the capacity to meet passengers' needs as existing systems are often slow and difficult to use. These difficulties are especially pronounced with a large number of users on an aircraft. Additionally, passengers often face problems with reliability and cost. Many passengers are willing to pay additional cost for access to broadband communications that provide increased reliability and speed. Accordingly, it is desirable to provide a system and method that adaptively aggregates broadband communications channels for in-flight aircraft to provide greater reliability and speed for user at a desired cost.

### BRIEF SUMMARY

Various embodiments of a system for collecting line replaceable unit removal data and a method for collecting line replaceable unit removal data are disclosed herein.

In one embodiment, a method for aggregating usage of broadband communications channels for an in-flight aircraft, comprises: establishing wireless communications channel links between a network router and passengers on board the in-flight aircraft; bonding a plurality of communications channels into a bonded group; configuring threshold parameters of the bonded group based on the bandwidth requirements of priority passenger channel links; continuously monitoring the bandwidth requirements of priority passenger channel links; removing a communications channel from the bonded group if the bandwidth requirements of the priority passenger channel links exceed the threshold parameters; and adding a communications channel to the bonded group if the bandwidth requirements of priority passenger channel links with the passengers are below the threshold parameters.

In another embodiment, a system for aggregating usage of broadband communications channels for an in-flight aircraft, comprises: an antenna on board the in-flight aircraft that establishes a broadband communications link with an orbital communication satellite; a network router on board the in-flight aircraft that receives broadband communications channels from the orbital communication satellite through the antenna and bundles multiple channels into a bonded group; a computer readable media located on the network router, that contains stored executable instructions for the router to, allow the passengers to select the bandwidth requirements of their wireless communications links, continuously monitor the bandwidth requirements of priority passenger's wireless communications links, and adjust the number of channels in the bonded group to meet the bandwidth requirements of the priority passenger's wireless communications links.

### BRIEF DESCRIPTION OF THE DRAWINGS

The exemplary embodiments will hereinafter be described in conjunction with the following drawing figures, wherein like numerals denote like elements, and wherein:
FIG. 1 is a diagram showing as satellite broadband communications links with an in-flight aircraft in accordance with an exemplary embodiment;
FIG. 2 is a diagram showing a router on board an in-flight aircraft that provides wireless broadband communications links with passengers in accordance with another exemplary embodiment;
FIG. 3 is a flowchart showing a method for continuous adaptive aggregation of broadband communication channels on board an in-flight aircraft in accordance with another exemplary embodiment; and
FIGS. 4a-4d are diagrams showing adjustments to bonding groups of broadband channel links in accordance with other exemplary embodiments.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

It should be understood that throughout the drawings, corresponding reference numerals indicate like or corresponding parts and features. As used herein, the term module refers to any hardware, software, firmware, electronic control component, processing logic, and/or processor device, individually or in any combination, including without limitation: application specific integrated circuit (ASIC), an electronic circuit, a processor module (shared, dedicated, or group) and memory module that executes one or more software or firmware programs, a combinational logic circuit, and/or other suitable components that provide the described functionality.

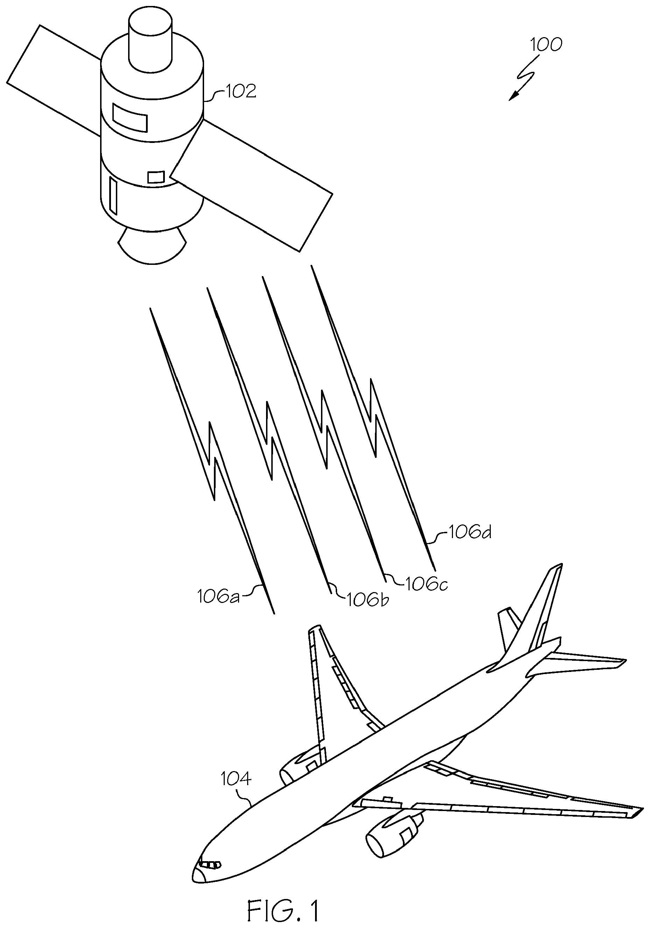

A system and method for adaptive aggregation of broadband communications channels for in-flight aircraft has been developed. Figure 1 shows a diagram of an example of a satellite broadband communications links within in-flight aircraft 100. The satellite 102 is in orbit above the earth and may be part of a network of satellites to provide continuous communications coverage across a broad geographic area. The satellite 102 provides up to four separate independent small resource broadband "communications channels" 106a - 106d to a single in-flight aircraft 104.

These broadband channels deliver simultaneous voice and data communications as well as always-on data. One of the communication channels is a dedicated "Background IP" channel. The Background IP bandwidth usage is billed to users based on data consumption. It may also be shared with other in-flight aircraft if bandwidth usage allows. The other three potential communication channels are "streaming". In these links, the bandwidth is not shared but is instead dedicated to designated users. The bandwidth usage of the streaming channels is billed to users by the hour.

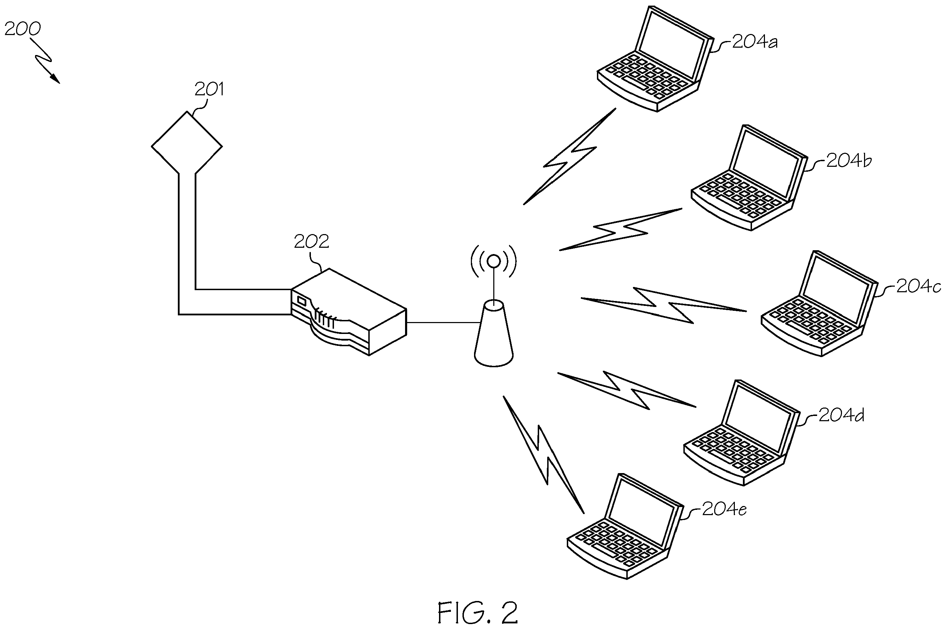

Figure 2 shows a diagram of an example of a wireless broadband system on board the in-flight aircraft 200. An onboard antenna 201 establishes the broadband communications connection with the orbital satellite and connects to a network router 202. The network router 202 includes a microprocessor and computer readable media that stores the software to control the onboard wireless communications network. The onboard passengers 204a - 204e wirelessly connect to the router 202. Once this connection to the passenger is established, it is defined as a "communication link". In alternative embodiments, the onboard passengers 204a-204e may physically connect to the router 202 with any suitable equipment such as a standard RJ45 cable or other similar device. Once a wireless communications channel link is established between the router and the passengers, dynamic internet protocol (IP) streaming provides simultaneous voice and data communications to a connected passenger. Streaming video service may also be included in some embodiments.

The communication satellite may provide up to four channels of data communications to the network router on board the aircraft in some embodiments. Alternative embodiments may use up to four separate antennas if the communication satellite is not capable of handling four streaming data communications channels. However, there is little relation between the number of satellite channels and the number of links to the onboard passengers 204a - 204e. As long as there is a single satellite channel (e.g., Background IP), it is possible to give all onboard passengers data access links. The data transfer rate for each channel is dependent on the type of antenna on board the aircraft. For example, a high gain antenna may receive a maximum data transfer rate of 650 kb\sec (kbps) per channel. In comparison, a smaller, intermediate gain antenna may receive a maximum data transfer rate of 332 kb\sec (kbps) per channel.

A technique called "channel bonding" is used in some embodiments to provide efficient usage of the wireless broadband bandwidth resulting in increased throughput. Channel bonding is an aggregation of multiple channels at the open systems interconnection (OSI) level 3 (network communications). If a single channel is overloaded and begins to slow down, bonding the channel with adjacent channels into a "bonding group" will allow data to be transmitted on the combined channel and thus work through any slowdowns or data congestion. However, once a bonding group is formed, fewer channels and bandwidth will remain for other users. The bonding or "aggregation" of the channels occurs between the router and the satellite. In alternative embodiments, the bonding may occur between the router and a ground based server. In practice, the channels may be spread across several satellites.

For wireless service on board an in-flight aircraft, unused bandwidth is costly for the service provider. The bandwidth demands among multiple passengers fluctuates significantly. Even with channel bonding, data transfer rates to an individual may still slow significantly if there is heavy usage among the connected passengers. Consequently, a data service provider may offer reserved or "priority" to passengers willing to pay additional cost for reserved bandwidth that is continuously available. At other times, light usage among connected passengers results in unused bandwidth among the bonded channel group that is essentially wasted. As usage demand fluctuates, a dynamic channel bonding technique that actively adds or subtracts channels to a bonding group based on need will increase network efficiency.

In some embodiments, two broad categories of broadband service are available to the passengers. The first category, called Background IP, utilizes shared bandwidth among all users in a single bonded group. The passengers are charged by usage of data. The second category, called "priority", utilizes reserved bandwidth among selected users in second bonded group. These selected or "priority" users are passengers who have requested reserved bandwidth that is always available or "always on". Typically, Background IP service is much less expensive than priority service. Passengers who have opted for priority access have agreed to pay extra cost for this enhanced service.

The communications of the basic passenger group will typically be relayed through a single Background IP channel link. The communications of the priority passenger group will be relayed through up to three streaming channel links which are bonded together. While this embodiment has been described using a limit of four total satellite communications channels, other embodiments have no constraint on the number of satellite communications channels that may be used.

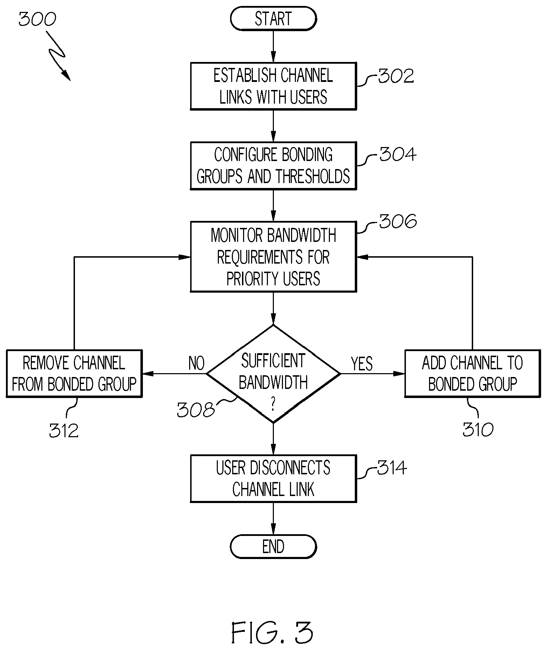

Figure 3 shows a flowchart of a method of continuous adaptive aggregation of broadband communications channels 300. In this embodiment, the broadband communication channel links are established with the passengers 302. A passenger may request priority service for always on access at additional cost. Next, channels are bonded together to form a bonding group and the threshold parameters of the group are set 304. The "threshold parameters" guide the addition or removal of channels from the bonding group. The parameters may be set based on usage cost, bandwidth limits, etc. In the present embodiment, the key goal of setting threshold parameters is ensuring that priority passengers have a constant adequate level of service. For example, a threshold parameter may be set so that when priority passengers are using 90% of the throughput capacity of their dedicated channels, another channel is removed from the Background IP bonding group and dedicated for their use.

The network router continuously monitors the bandwidth requirements for all priority users 306. If sufficient bandwidth exists for priority users, the network router will add a channel to the Background IP bonded group if the data throughput rate for the priority users will not be affected 310. However, if insufficient bandwidth exists to meet the needs of the priority users, the network router will remove a channel from the Background IP bonded group and dedicate that channel for use by the priority users 312 in a second bonded group. The monitoring process for the bandwidth requirements of the priority users is continuous until the users disconnect the communications channel links at the end of the flight 314.

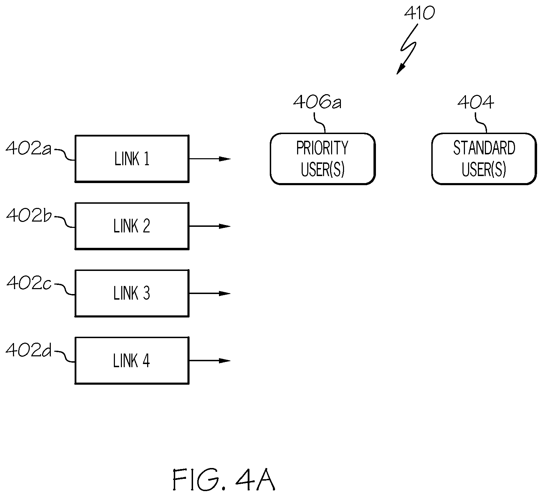

Figures 4a - 4d show illustrative diagrams of channel bonding assignments in accordance with some embodiments. Specifically, Figure 4a shows four separate channel links 402a - 402d which correspond to the channel links 106a - 106d shown previously in figure 1. These links 402a - 402d are combined together in a Background IP bonded group 410. The Background IP bonded group 410 provides wireless communications links to both priority users 406a and standard non-priority users 404 during low bandwidth usage periods. In this example, the bandwidth usage demand from the priority users 406a is low enough that a separate dedicated bonded group is not required. As a result, the four channels are combined into the Background IP bonded group.

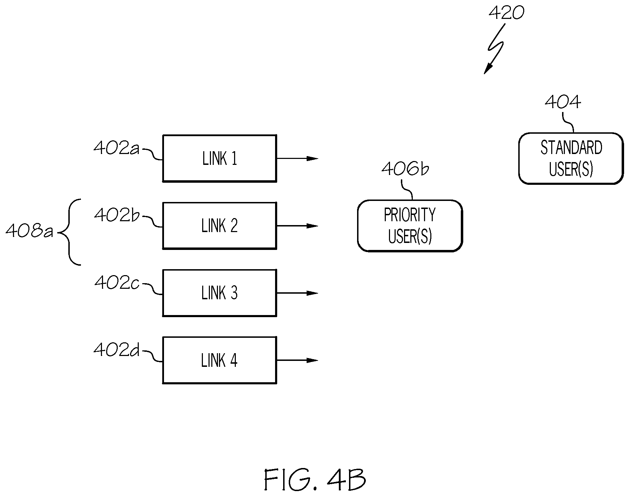

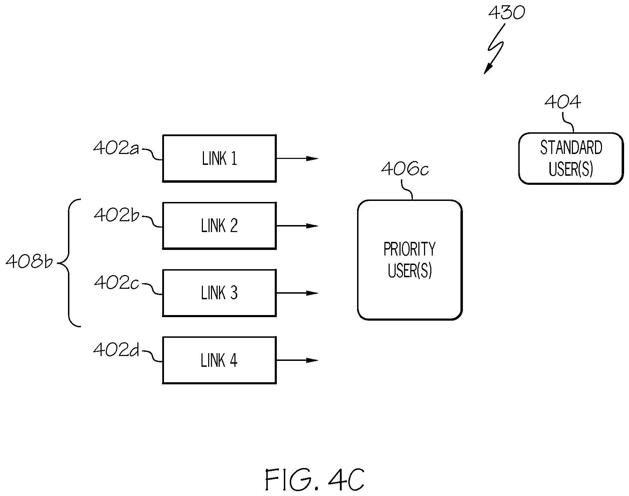

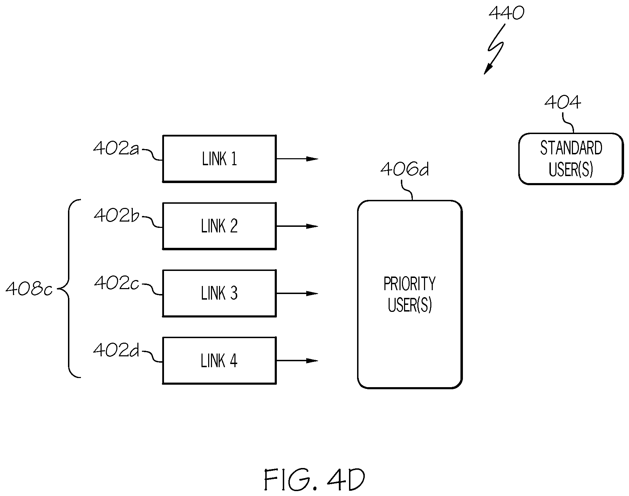

In Figure 4b, the bandwidth usage demand from the priority users 406b has increased so as to require a separate dedicated channel link 408a. In this example, Link 2 402b is removed from the bonded group 420 and reserved in a second bonded group 408a for the priority users 406b. The standard nonpriority users 404 continue to use the bonded group 420 of the remaining three links 402a, 402c and 402d. In Figure 4c, the bandwidth usage demand from the priority users 406c has increased further. As a result, Link 2 402b and Link 3 402c are removed from the bonded group 430 and reserved in the second bonded group 408b for the priority users 406c. The standard nonpriority users 404 continue to use the bonded group 430 of the remaining two links 402a and 402d. In Figure 4d, the bandwidth usage demand from the priority users 406c has increased even further. As a result, Link 2 402b, Link 3 402c and Link 4 402d are removed from the bonded group 440 and reserved in the second bonded group 408c for the priority users 406d. The standard nonpriority users 404 continue to use the remaining link 402a.

It should be understood, that the communications links reserved for the priority users may be added back to the Background IP bonded group as bandwidth usage demand from the priority users decreases. In this embodiment, the bonded group may fluctuate anywhere between 1 and 4 channels depending on bandwidth usage demand of priority users. The channels are dynamically allocated to the different bonding groups as necessary to provide an adequate level of service to priority users while limiting the cost of unused bandwidth.

In an alternative embodiment, a specialized computer software system loaded on the network router may use several communications channels to create a new communications link (called an "airflow link") which, in effect, behaves in a similar manner to the bonding groups. These communications channels are typically satellite links but are not limited to this format. The airflow link is available if at least one underlying bonding group is in use. The system doesn't attempt to use bonding groups which are not presently in use. Instead, the system quickly takes advantage of bonding groups as they become available. It handles the loss of bonding groups with only minimal and transient impact.

One skilled in the art will appreciate that the depiction of the system and method for adaptive aggregation of for an in-flight aircraft broadband data communications channels and the various components are merely exemplary and are not limiting with respect to size of the components or location within the system. Thus, the present disclosure is not limited to any specific layout and the system may include additional electronic components not shown in its implementation.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing Detailed Description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set-forth in the appended claims.

## Claims

1. A method for aggregating usage of broadband communications channels for an in-flight aircraft, comprising:
establishing wireless communications channel links between a network router and passengers on board the in-flight aircraft;
bonding a plurality of communications channels into a bonded group;
configuring threshold parameters of the bonded group based on the bandwidth requirements of priority passenger channel links;
continuously monitoring the bandwidth requirements of priority passenger channel links;
removing a communications channel from the bonded group if the bandwidth requirements of the priority passenger channel links exceed the threshold parameters; and
adding a communications channel to the bonded group if the bandwidth requirements of priority passenger channel links with the passengers are below the threshold parameters.

2. The method of Claim 1, where the wireless communications passenger channel links are provided to the in-flight aircraft from an orbital communication satellite.

3. The method of Claim 1, where the wireless communications passenger channel links provide voice communications.

4. The method of Claim 1, where the wireless communications passenger channel links provide data communications.

5. The method of Claim 4, where the data communications comprise streaming video service.

6. The method of Claim 1, where the bonded group comprises between 1 to 4 communications channels.

7. The method of Claim 6, where each channel of the bonded group has a maximum data transfer rate of 650 kb/sec (kbps).

8. The method of Claim 1, where a priority passenger channel link is determined by a passenger when the wireless communications passenger channel link is established.

9. The method of Claim 8, where the priority passenger channel link is always on and providing continuous data communications to the passenger.
